Europäisches Patentamt

European Patent Office

Office européen des brevets

(11) Veröffentlichungsnummer: **0 538 627 B1**

(12) **EUROPÄISCHE PATENTSCHRIFT**

(45) Veröffentlichungstag der Patentschrift: **25.10.95**

(51) Int. Cl.6: **F04D 25/08**, F04D 27/02, B60H 1/00

(21) Anmeldenummer: **92116074.3**

(22) Anmeldetag: **19.09.92**

(54) **Gebläse.**

(30) Priorität: **25.10.91 DE 4135297**

(43) Veröffentlichungstag der Anmeldung:
**28.04.93 Patentblatt 93/17**

(45) Bekanntmachung des Hinweises auf die Patenterteilung:
**25.10.95 Patentblatt 95/43**

(84) Benannte Vertragsstaaten:
**BE CH DE FR GB LI**

(56) Entgegenhaltungen:
**DE-A- 2 341 296**
**DE-A- 3 429 427**
**DE-A- 3 710 470**
**DE-A- 4 002 504**

(73) Patentinhaber: **AURORA Konrad G. Schulz GmbH & Co**
**Südring 4**
**D-69427 Mudau (DE)**

(72) Erfinder: **Wolf, Hannes**
**Tulpenweg 11**
**W-6967 Buchen (de)**

(74) Vertreter: **Baronetzky, Klaus, Dipl.-Ing. et al**
**Patentanwälte**
**Dipl.-Ing. R. Splanemann, Dr. B. Reitzner,**
**Dipl.-Ing. K. Baronetzky**
**Tal 13**
**D-80331 München (DE)**

EP 0 538 627 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Gebläse nach dem Oberbegriff von Anspruch 1.

Aus der DE-AS 26 34 713 ist ein Gebläse für Kraftfahrzeuge, nämlich Omnibusse, bekannt, bei dem das Gebläse mit einem Wärmetauscher versehen ist und eine Regelung sowohl der Leistung der Wärmetauscher als auch der Leistung der Gebläse durchgeführt werden soll.

Mit der Kombination der Leistungsregelung der Wärmetauscher mit derjenigen der Gebläse soll gemäß dieser Auslegeschrift eine angenehme Klimatisierung des gesamten Innenraums sichergestellt werden.

Als Steuergroße für die angenehme Klimatisierung wird hier je ein Thermostat verwendet, wobei bei nur mäßig erwärmten Wärmetauschern die Leistung der Gebläse auf die Hälfte vermindert werden soll und lediglich bei vollständig erwärmten Wärmetauschern die Gebläse auf vollen Touren laufen können.

In der praktischen Realisierung ist es hierbei vorgesehen, die Leistung der Wärmetauscher stufenlos, und das Gebläse in Stufen zu regeln, wobei eine Halbleistungsstufe vorgesehen ist.

Mit dieser Gebläseanordnung läßt sich zwar eine angenehme Klimatisierung des Innenraums eines Omnibus erreichen. Für das Defrosten von Scheiben, wie beispielsweise von Windschutzscheiben ist dieses Gebläse jedoch weniger geeignet. Daher ist es für die Beheizung des Fahrerraums bei dieser Gebläseanordnung vorgesehen, ein von Hand in seiner Leistung regulierbares Gebläse vorzusehen.

Ein derartiges von Hand in seiner Leistung regulierbares Gebläse ist ferner in weiten Bereichen bekannt geworden. Hierzu wird üblicherweise dem Gebläse ein Spannungsteiler vorgeschaltet, wobei entweder eine stufenlose Regelung über einen Potentiometer, oder eine beispielsweise vierstufige Regelung über feste Vorwiderstände realisiert ist. Auf diese Weise kann die Gebläseleistung manuell dem Wohlbefinden des Fahrers bzw. der gewünschten Defrosterleistung angepaßt werden.

Aus Kostengründen ist das Gebläse häufig jedoch so dimensioniert, daß es bei ungünstigen Betriebsbedingungen, wie beispielsweise einem sehr hohem Luftfeuchtigkeitsgrad im Inneren des Fahrzeugs kombiniert mit einer kalten Außentemperatur, nicht verhindern kann, daß die Windschutzscheibe nach dem Start des Fahrzeugs beschlägt.

Demgegenüber ist es Aufgabe der Erfindung, ein Gebläse gemäß dem Oberbegriff von Anspruch 1 zu schaffen, daß besonders geeignet ist, ein Beschlagen der Scheiben, wie insbesondere der Windschutzscheibe, kurz nach der Inbetriebnahme des Fahrzeugs zu verhindern, ohne daß besondere Zusatzinvestitionen gegenüber den verwendeten Gebläsen erforderlich wären.

Diese Aufgabe wird erfindungsgemäß durch Anspruch 1 gelöst. Vorteilhafte Weiterbildungen ergeben sich aus den Unteransprüchen.

Besonders günstig ist es bei der Erfindung, daß sich die erhöhte Luftleistung gerade zu einem Zeitpunkt bereitstellen läßt, zu dem ein Verhindern des Beschlagens sehr wichtig ist. Durch die erfindungsgemäße Konstantregelung der aufgenommenen elektrischen Leistung lassen sich überraschenderweise Gebläse verwenden, die an sich für eine erheblich geringere Nennspannung als die Bordnetzspannung ausgelegt sind.

Hierbei läßt sich die Tatsache ausnutzen, daß unmittelbar nach dem Starten des Kraftfahrzeugs die Fahrzeugbatterie - insbesondere bei größerer Kälte, bei welcher die Defrosterleistung besonders benötigt wird - recht schwach ist. Dann kann gefahrlos mit einer Leistung operiert werden, die oberhalb der an sich spezifizierten Nennleistung liegt. Da dieser Betriebszustand nicht als Dauerbetrieb vorgesehen ist, sondern vielmehr lediglich zum kurzeitigen Abtauen dient, ist eine Überhitzung des Gebläses praktisch ausgeschlossen.

Besonders günstig läßt sich hierbei auch die Tatsache ausnutzen, daß bei kaltem Motor auch der dem Gebläse zugeführte Luftstrom ziemlich kalt ist. Dementsprechend wird auch der Gebläsemotor stark gekühlt, und trägt, andersherum betrachtet, stärker dazu bei, die gewünschte Erwärmung des Defrosterluftstroms zu erhöhen. Die erhöhte aufgenommene elektrische Leistung wird über die Kühlrippen des Gebläses vollständig an dem Luftstrom abgegeben und trägt somit zu dessen Erwärmung bei. Aufgrund der erheblich kleineren Masse ist die Verzögerung, bis der Gebläsemotor Abwärme erzeugt, erheblich geringer als die Verzögerung durch das Motorkühlsystem des Fahrzeugs.

Gemäß einer vorteilhaften Ausgestaltung der Erfindung ist es vorgesehen, die so vorgebene Defrosterperiode zeitlich zu begrenzen, und danach wiederum eine Konstantleistungsregelung, jedoch mit verminderte Leistung, beispielsweise der Nennleistung des Gebläses, vorzusehen.

Bei einem Bordnetz mit einer Nennspannung von 24 V kann beispielsweise ein Gebläsemotor mit einem Nennspannung von 18 V verwendet werden. Die erfindungsgemäße Konstantleistungsregelung kann dann beispielsweise zu einer Erhöhung der aufgenommenen bzw. - mit kleiner zeitlicher Verzögerung - auch der abgegebenen Abwärme um beispielsweise 30 bis 40% führen. Die so erhöhte Abwärme trägt bereits fühlbar zur Steigerung der Defrosterwirkung bei, insbesondere, da auch der erzeugte Luftstrom um beispielsweise 10 bis 15% erhöht ist.

Indem eine automatische Konstantleistungs-Regelschaltung realisiert ist, wird zudem die Möglichkeit ausgeschlossen, den oberhalb der Nennleistung betriebenen Gebläsemotor zu überlasten.

Dennoch läßt sich die gewünschte Konstantleistungsregelung, d.h., die Konstantregelung der aufgenommenen elektrischen Leistung bei den je gewünschten Arbeitspunkten, sehr einfach realisieren, indem beispielsweise die aufgenommene Spannung und der aufgenommene Strom je über einen entsprechenden Fühler erfaßt werden.

In der praktischen Ausführung läßt sich das erfindungsgemäße Gebläse beispielsweise dadurch verwirklichen, daß als Stromfühler ein Vorwiderstand verwendet wird, dessen Spannungsabfall als ein Regelparameter verwendet wird. Dieser wird mit der an dem Gebläsemotor anliegenden Klemmenspannung in Beziehung gesetzt, so daß eine Leistungskonstantregelung realisiert werden kann.

Besonders günstig läßt sich eine derartige Regelung mit einer Digitalsteuerung realisieren. Diese ist nicht nur besonders verlustarm, da keine Regel-Vorwiderstände oder Längsregel-Transistoren als Stellelemente verwendet werden müssen, sondern erlaubt auch die Realisierung mit bereits erhältlichen, vorgefertigten elektronischen Regelmodulen, die beispielsweise zwei Eingänge aufweisen, von denen einer mit der Klemmenspannung und der andere mit der aufgenommenen Strom beaufschlagt wird.

Mit der erfindungsgemäßen elektronischen Konstantleistungsregelung läßt sich auch eine Regelung der Blasleistung realisieren. Wenn beispielsweise die Stromaufnahme abnimmt, da die Strömungswiderstände des Gebläses erhöht werden, indem beispielsweise eine Luftaustrittsdüse geschlossen wird, erhöht ein elektronisches Regelmodul automatisch die Spannung.

Bei abnehmendem statischem Druck wird der Luftstrom vergrößert, wobei das erfindungsgemäße Gebläse auch staudrucksicher ist. Demgegenüber bestand bei bekannten Gebläsen die Möglichkeit, daß bei hohen Fahrtgeschwindigkeiten der Staudruck so Zunahm, daß die Luft praktisch das Lüfterrad des Gebläses noch beschleunigte, wodurch die aufgenommene elektrische Leistung über Gebühr weiter zunahm. Da die aufgenommene elektrische Leistung bei dem erfindungsgemäßen Gebläse konstant gehalten wird, kann dieser Betriebszustand nicht eintreten.

Besonders günstig ist es ferner, daß insbesondere dann, wenn zu Defrosterzwecken die unteren Belüftungsdüsen der Heizungsanlage geschlossen sind, hingegen die gesamte Luftleistung auf die Windschutzscheibe und die angrenzenden Scheiben geleitet ist, sich erfindungsgemäß eine Erhöhung sowohl des erzeugten statischen Drucks als auch der erzeugten Luftleistung einstellt. Diese Leistungserhöhung ist relativ erheblich stärker als die Leistungserhöhung bei nahezu frei oder ganz frei ausblasendem Gebläse und liegt darin begründet, daß erfindungsgemäß die Kennlinie des statischen Drucks gegenüber dem Volumenluftstrom als Gerade verläuft, während die Kennlinien des statischen Drucks beim Stand der Technik mit zunehmenden Luftleistungen stärker abfällt.

Gemäß einer abgewandelten Ausgestaltung ist es vorgesehen, die Konstanthaltung der aufgenommene elektrischen Leistung auf die abgegebene Luftleistung zu beziehen. In der praktischen Realisierung stellt sich dann für die elektrische Leistung eine Kennlinie ein, die eine etwas geringere, konstante Steigung als beim Stand der Technik aufweist, ohne exakt die Steigung 0 aufzuweisen. Gewünschtenfalls kann diese in besonderen Fällen - betrachtet über den zunehmenden Volumenstrom - auch negativ sein.

Weitere Parameter können für die Beeinflussung der gewünschten Kennlinie wahlweise verwendet werden.

Dementsprechend versteht es sich, daß das Regelmodul weitere Eingänge aufweisen kann, wobei beispielsweise eine Temperatursteuerung, eine Drehzahlsteuerung durch die Drehzahl des Gebläsemotors oder eine Volumensteuerung möglich ist.

Weitere Vorteile, Einzelheiten und Merkmale ergeben sich aus der nachstehenden Beschreibung eines Ausführungsbeispiels der Erfindung anhand der Zeichnung:

Es zeigen:

Fig. 1    eine schematische Ansicht einer Ausführungsform eines erfindungsgemäßen Gebläses; und

Fig. 2    ein Kennlinienfeld für ein Gebläse gemäß Fig. 1.

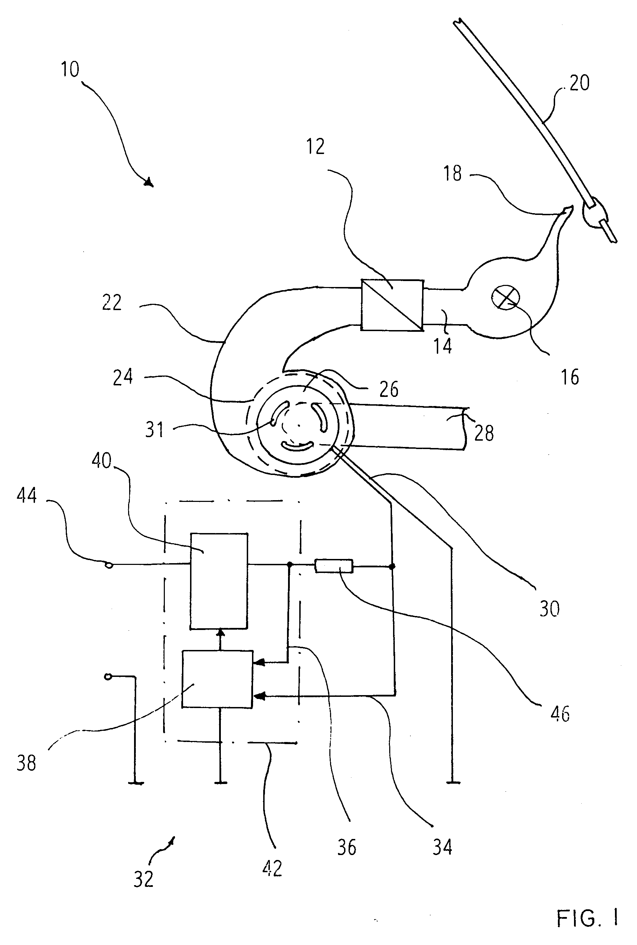

Ein Gebläse 10 ist gemäß Fig. 1 als Querstromgebläse ausgebildet, wobei es sich versteht, daß auch eine beliebige andere geeignete Gebläseart verwendet werden kann. Dem Gebläse nachgeschaltet ist ein Wärmetauscher 12, an den ein Verteilkanal 14 für die von dem Gebläse 10 abgegebene Blasluft angeschlossen ist. Der Verteilkanal 14 weist eine Mehrzahl von Auslaßleitungen auf, von denen eine Auslaßleitung 16 sowie eine Defrosterdüse 18 schematisch dargestellt ist.

Die Defrosterdüse 18 wirkt in an sich bekannter Weise auf eine Windschutzscheibe 20.

Das Gebläse 10 weist ferner ein Gebläsegehäuse 22 auf, in dem ein Lüfterrad 24 läuft, das an einer Seitenwand des Gebläsegehäuses 22 gelagert ist. Auf der Welle des Lüfterrads 24 läuft ferner ein Gebläsemotor 26, der über einen entsprechenden Flansch an dem Gebläsegehäuse 22 befestigt ist.

Gemäß einem bevorzugten Ausführungsbeispiel erstreckt sich ein Lufteintritt des Gebläsegehäuses 22 zur Seite des Gebläsemotors 26 hin, und weist einen größeren Innendurchmesser als dessen Außendurchmesser auf. Der schematisch dargestellte Lufteintritt 28 bildet somit einen Kanal, der für das Ansaugen von Frischluft oder Umluft ausgelegt ist und der kurz vor dem Eintritt in das Gebläsegehäuse 22 den Gebläsemotor 26 umströmt. Zusätzlich sind in dem Gebläsemotor 26 in an sich bekannter Weise Kühlschlitze 31 vorgesehen, die ebenfalls von der eintretenden Frischluft oder Umluft in dem Lufteintritt 28 durchtreten werden.

Der Gebläsemotor 26 weist ferner einen elektrischen Anschluß 30 auf, an den eine erfindungsgemäße Energieversorgungsschaltung 32 angeschlossen ist.

Die Energieversorgungschaltung 32 weist einen Spannungsfühler 34 und einen Stromfühler 36 auf, deren Signale einer Multiplikatorschaltung 38 zugeführt werden. Die Multiplikatorschaltung 38 bildet zusammen mit einem Leistungssteuerkreis 40 einen Leistungskonstantregelkreis 42, der im Beispielsfall als elektronisches Regelmodul ausgebildet ist.

Eingangsseitig ist der Leistungskonstantregelkreis 42 an eine Bordnetz-Nennspannung 44 angeschlossen.

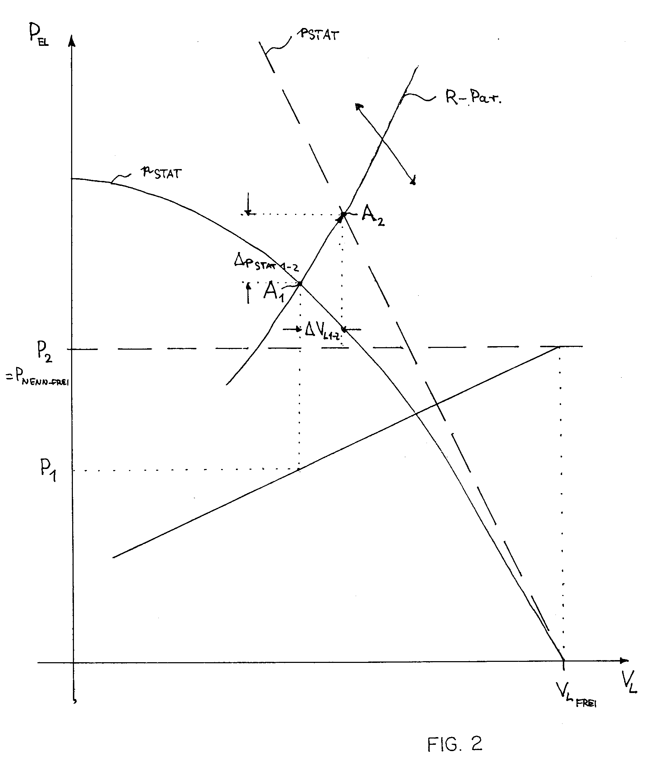

In Fig. 2 sind die aufgenommene elektrische Leistung $P_{el}$ und der abgebene statische Druck $p_{stat}$ je über dem erzeugten Luftstrom $V_L$ aufgetragen. Die durchgezogenen Linien entsprechen hierbei einem Gebläse mit konventioneller Ansteuerung, während die gestrichelten Kurven je einer Ausführungsform eines erfindungsgemäßen Gebläses entsprechen. Es ist ersichtlich, daß bei einem Arbeitspunkt $A_1$ des konventionellen Gebläses eine elektrische Leistung $P_1$ aufgenommen wird. Durch die erfindungsgemäße Konstantleistungsregelung stellt sich ein Arbeitspunkt $A_2$ ein, und die aufgenommene elektrische Leistung beträgt $P_2$. Der Arbeitspunkt $A_2$ liegt hierbei auf der gleichen Widerstandsparabel R-Par, deren Steigung beispielsweise von der Klappenstellung abhängt und deren Schnittpunkt mit der statischen Druckkennlinie $p_{stat}$ den jeweiligen Arbeitspunkt $A_1$ bzw. $A_2$ bildet.

Wie aus Fig. 2 ersichtlich ist, ist der Volumenstrom beim Arbeitspunkt $A_2$ um $\Delta V_{L1-2}$ größer als derjenige im Arbeitspunkt $A_2$; ebenso ist der statische Druck des Arbeitspunktes $A_2$ um $\Delta p_{stat1-2}$ größer als der statische Druck des Arbeitspunktes $A_1$. Dies bedingt sowohl eine Zunahme des statischen Drucks $p_{stat}$ als auch eine Erhöhung des Volumenstroms $V_L$, und zwar je etwa um 10 bis 15%.

Parallel hierzu erhöht sich - bezogen auf die aufgenommene elektrische-Leistung $P_{el}$ - diese um 30 bis 40%, was zudem der Erwärmung des Gebläsemotors zur Erhöhung der Defrosterleistung zugute kommt.

Ferner ist ersichtlich, so daß die aufgenommene elektrische Leistung $P_{el}$ unabhängig von dem Volumenstrom $V_L$ im betrachteten Arbeitsbereich konstant ist, wie auch, daß die erfindungsgemäße Kennlinie $p_{stat}$ über $V_L$ im wesentlichen eine Gerade bildet.

Aus Fig. 2 ist ferner ersichtlich, daß die Kurven $p_{stat}$ des konventionellen und des erfindungsgemäßen Gebläses bei $p_{stat}$ konvergieren. Dieser Punkt entspricht dem freiausblasenden Gebläse und ergibt den Volumenstrom $V_{L-frei}$. In diesem Betriebszustand ist auch die aufgenommene elektrische Leistung beim Stand der Technik und der Erfindung gleich, so daß gilt $P_1 = P_2$. Bei dem dargestellten Ausführungsbeispiel, das keine weiteren Parameter für die Konstantleistungregelung umfaßt, ist $P_2$ über den gesamten Arbeitsbereich gleich der in diesem Punkt erzielten und als Basis für die Auslegung dienenden Nennleistung $P_{NENN-frei}$.

Mit der erfindungsgemäßen Ansteuerung des Gebläses wird das Absinken der Leistung im Arbeitspunkt gegenüber der Maximalleistung kompensiert.

Die in Zusammenhang mit der Erfindung durchgeführten Untersuchungen haben ergeben, daß ohne weiteres ein auf eine Nennspannung von 18 V ausgelegter Motor mit einer Bordnetzspannung von 24 V verwendet werden kann. Es versteht sich, daß die üblichen Sicherheitsfunktionen wie eine Maximalstromsicherung zur Absicherung eines Blockier-Betriebszustandes bzw. zur Verhinderung der Brandgefahr unproblematisch über den Stromfühler 34 realisierbar sind.

Zusätzlich kann auch ein Vorwiderstand 46 des Stromfühlers 36 im Bereich des Lufteintritts 24 vorgesehen sein, so daß die dort erzeugte Erwärmung ebenfalls zur Steigerung der Temperatur an der Defrosterdüse 18 beiträgt.

## Patentansprüche

1. Gebläse (10), insbesondere für Landfahrzeuge, mit einem Gebläsegehäuse (22), an welchem ein Elektromotor (26) befestigt ist, der von einem durch das Gebläse erzeugten Luftstrom gekühlt wird, mit einer geregelten Energieversorgungsschaltung (32) für den Elektromotor, der für eine vorgebene Nennspannung ausgelegt ist, dadurch gekennzeichnet, daß die Energieversorgungsschaltung (32) an ein Bordnetz mit einer Bordnetz-Nennspannung (44) angeschlossen ist, die größer als die vorgebene Nennspannung ist.

2. Gebläse nach Anspruch 1, dadurch gekennzeichnet, daß die Energieversorgungsschaltung (32) einen Spannungs- (34) und einen Stromfühler (36) sowie eine Multiplikatorschaltung (38) aufweist, an welche die Fühler (34, 36) angeschlossen sind, und der Ausgang der Multiplikatorschaltung (38) an einem Steuerkreis (40) angeschlossen ist.

3. Gebläse nach einem der vorhergehenden Ansprüche, dadurch gekennzeichnet, daß der Steuerkreis (40) digital mit einer Impulssteuerung aufgebaut ist und für die Spannungs- (34) und Stromfühler (36) Integratoren verwendet werden.

4. Gebläse nach einem der vorhergehenden Ansprüche, dadurch gekennzeichnet, daß zusätzlich zu den Spannungs- (34) und Stromfühlern (36) ein Zeitfühler, ein Luftstromfühler, ein Temperaturfühler und/oder ein Maximalstrombegrenzer vorgesehen ist.

5. Gebläse nach einem der vorhergehenden Ansprüche, dadurch gekennzeichnet, daß das Gebläsekennfeld, in welchem der statische Druck gegenüber der Gebläseleistung aufgetragen ist, mindestens eine Kurve ($P_{stat}$) aufweist, die im Arbeitsbereich als Gerade ausgebildet ist.

6. Gebläse nach einem der vorhergehenden Ansprüche, dadurch gekennzeichnet, daß die konstantgeregelte aufgenommene elektrische Leistung des Gebläses (10) nach Ablauf einer zeitlich begrenzten Maximalleistungsphase vermindert wird.

7. Gebläse nach einem der vorhergehenden Ansprüche, dadurch gekennzeichnet, daß ein Leistungsregelkreis, insbesondere ein Leistungskonstantregelkreis (42) vorgesehen ist, der die Energieversorgungsschaltung (32) nach einer vorgegebenen Regelkurve steuert.

**Claims**

1. A blower (10), particularly for land vehicles, having a blower housing (22) to which an electric motor (26), which is cooled by an airflow produced by said blower, is attached, with a controlled energy supply circuit (32) for said electric motor, which is designed for a predetermined nominal voltage, **characterized** in that said energy supply circuit (32) is connected to a supply system having a supply system nominal voltage (44) which is higher than the predetermined nominal voltage.

2. A blower according to claim 1, characterized in that said energy supply circuit (32) has a voltage sensor (34) and a current sensor (36) as well as a multiplying circuit (38) to which the sensors (34, 36) are connected, and that the output of said multiplying circuit (38) is connected to a control circuit (40).

3. A blower according to one of the preceding claims, characterized in that said control circuit (40) is constructed digitally with a pulse control and integrators are used for said voltage sensor (34) and said current sensor (36).

4. A blower according to one of the preceding claims, characterized in that additionally to said voltage sensor (34) and said current sensor (36) a time sensor, an airflow sensor, a temperature sensor and/or an overcurrent limiter is provided.

5. A blower according to one of the preceding claims, characterized in that the characteristic diagram of the blower, in which the static pressure is represented with respect to the power of the blower, at least shows a curve ($P_{stat}$) which is formed as a straight line in the working area.

6. A blower according to one of the preceding claims, characterized in that the electrical power taken up by said blower (10), which is controlled to a constant value, is reduced after the end of a phase of maximum power which is limited in time.

7. A blower according to one of the preceding claims, characterized in that a power control circuit, particularly a constant power control circuit (42) is provided, which controls the energy supply circuit according to a predetermined control curve.

**Revendications**

1. Soufflante (10), notamment pour véhicules routiers, comportant un carter de soufflante (22), sur lequel est fixé un moteur électrique (26), qui est refroidi par un courant d'air produit par la soufflante, et comportant un circuit réglé d'alimentation en énergie (32) pour le moteur électrique, qui est conçu pour une tension nominale prédéterminée, caractérisée en ce que le circuit d'alimentation en énergie (32) est raccordé, au niveau d'un réseau de bord, à une tension nominale (44) du réseau de bord, qui est supérieure à la tension nominale prédéterminée.

2. Soufflante selon la revendication 1, caractérisée en ce que le circuit d'alimentation en énergie (32) possède un capteur de tension (34) et un capteur de courant (36) ainsi qu'un circuit multiplicateur (38), auxquels sont raccordés des capteurs (34,36), et que la sortie du circuit multiplicateur (38) est raccordée à un circuit de commande (40).

3. Soufflante selon l'une des revendications précédentes, caractérisée en ce que le circuit de commande (40) est agencé numériquement avec une commande par impulsions et qu'on utilise des intégrateurs pour le capteur de tension (34) et le capteur de courant (36).

4. Soufflante selon l'une des revendications précédentes, caractérisée en ce qu'en plus du capteur de tension (34) et du capteur de courant (36),il est prévu une minuterie, un capteur du courant d'air, un capteur de température et/ou un limiteur de courant maximum.

5. Soufflante selon l'une des revendications précédentes, caractérisée en ce que le champ de caractéristiques de la soufflante, dans lequel la pression statique est enregistrée en fonction de la puissance de la soufflante, possède au moins une courbe ($P_{stat}$), qui se présente sous la forme d'une droite dans la zone de travail.

6. Soufflante selon l'une des revendications précédentes, caractérisée en ce que la puissance électrique absorbée de la soufflante (10), qui est réglée à une valeur constante, ----- est réduite au bout de l'écoulement d'une phase de puissance maximale limitée dans le temps.

7. Soufflante selon l'une des revendications précédentes, caractérisée en ce qu'il est prévu un circuit de réglage de puissance, notamment un circuit de réglage de puissance constante (42), qui commande le circuit d'alimentation en énergie (32) conformément à une courbe de régulation prédéterminée.

FIG. I

FIG. 2